# EUROPÄISCHE PATENTSCHRIFT

(11) **EP 1 311 044 B1**
(45) Veröffentlichungstag und Bekanntmachung des Hinweises auf die Patenterteilung: **08.08.2007**
(21) Anmeldenummer: 02022579.3
(22) Anmeldetag: 08.10.2002
(51) Int. Cl.: H02G 3/22

(54) **Modulare Schottung zur dichten Durchführung von Kabeln und Rohrleitungen durch Bauteile aller Art (mit nachweisbarer Dichte)**
Modular sealed feedthrough for cables and ducts through different sorts of components, with controled seal
Cloison modulaire pour traversée étanche de cables et tuyaux à travers divers composants avec étancheite controlée

(30) Priorität: 10.10.2001 DE 10150075
(43) Veröffentlichungstag der Anmeldung: 14.05.2003
(73) Patentinhaber: Roxtec AB, 371 23 Karlskrona (SE)
(72) Erfinder: Hartwig, Walter, 22043 Hamburg (DE); Bröder, Jan, 22111 Hamburg (DE)
(74) Vertreter: Karlsson, Leif Gunnar Börje

(56) Entgegenhaltungen:
- EP-A- 0 429 916
- US-A- 4 901 956
- US-A- 5 783 776

## Beschreibung

Die Erfindung betrifft ein modulare Schottung zur dichten Durchführung von Kabeln und Rohrleitungen durch Bauteile aller Art mit aus zwei quaderförmigen Teilen mit jeweils einer halbzylindrischen Ausnehmung bestehenden Modulen, die entweder ein Kabel, eine Rohrleitung oder ein Füllstück abdichtend umschließen.

Derartige Module sind aus der EP 0 429 916 B1 bekannt. Die Module werden jeweils zu mehreren nebeneinander und übereinander in einem Rahmen in einer Wand oder einer Decke eingelegt, wobei die Auswahl und die Abmessungen rasterplanmäßig aufeinander abgestimmt werden und je nach Anzahl und Stärke der durchzuführenden Leitungen die Füllstücke aus den Modulen entfernt und die Leitungen eingelegt werden. Jeweils zwischen zwei Schichten von Modulen werden Ankerplatten eingelegt, die sich an dem Rahmen abstützen und damit ein Herausrutschen der Module aus dem Rahmen verhindern. Abschließend wird über eine Keildichtung ein Pressdruck auf die Module ausgeübt, der die Module soweit zusammenpresst und verformt, so dass eine möglichst vollständige Abdichtung der Durchführung gegen drückendes Wasser, Feuer und Gas entsteht. Es können auch runde Stopfrahmen Anwendung finden, die in einer Kernbohrung eingesetzt werden, dabei wird der zur Abdichtung notwendige Druck durch Festziehen von Spannbolzen erzeugt.

Ein Problem dabei ist, die Dichtigkeit dieses modularen Abschottungssystems festzustellen. Dabei ist die aufwendigste Möglichkeit, den gesamten Raum abzuschließen und mit Gas oder Druckluft zu fluten. Mit Hilfe von Manometern kann dann ein möglicher Druckabfall festgestellt werden. Diese Methode scheidet schon aufgrund des konstruktiven und wirtschaftlichen Aufwandes in den meisten Fällen aus.

Daher hat man diese Problem dadurch gelöst, dass man sogenannte Doppelschotts verwendet, wobei man zwei gleichartige Durchführungen parallel zu einander in einen entsprechenden größeren Rahmen in einer Wand eingesetzt hat. Hierdurch entsteht ein Zwischenraum zwischen den beiden Schottwänden, in den ein Prüfdruck gepumpt wird, um durch eine zeitabhänige Messung einen möglichen Druckabfall festzustellen. Sofern eine der beiden Schottwände undicht ist, wird das Gas vom höheren zum niedrigeren Druckpotential entweichen und die Undichtigkeit kann mit Hilfe eines Lecksuchsprays lokalisiert werden. Ein derartiges Doppelschott stellt aber keine wirtschaftliche Lösung dar, da die Materialkosten mindesten um den Faktor 2 größer sind und auch die Montagezeiten erheblich länger sind. Ein derartiges aufwendiges Doppelschott wird daher auch nur in hochexplosiven Bereichen von einigen Chemieanlagen oder zu Brandschutzzwecken verwendet.

Es sind sehr viele Einzelschottsysteme in sicherheitsrelevanten Anlagen, z.B. in explosionsgeschützten Anlagen, u.a. in Gasdruckregelstationen, im Einsatz. Ob sie aber wirklich gasdicht sind, d.h. im Störfall das Gas nicht diffundieren lassen, kann man nach der Montage eines modularen Schottes nicht eindeutig bestätigen.

Aufgabe der vorliegenden Erfindung ist es daher, eine modulare Schottung als Einzelschott zu schaffen, das die dargestellten Nachteile vermeidet und bei dem unmittelbar nach der Montage eine Prüfung auf Gasdichtigkeit vorgenommen werden kann.

Diese Aufgabe wird erfindungsgemäß dadurch gelöst, dass jedes Modul in seinen äußeren Dichtungsflächen umlaufende, quer zur Durchführungsrichtung der Kabel oder Rohrleitungen verlaufende Ausnehmung aufweist, in mindestens einer der Ausnehmungen mindestens eine Bohrung vorgesehen ist, die bis an eine äußere Mantelfläche des Kabels, der Rohrleitung oder des Füllstückes heranreicht. Vorzugsweise sind zwei Bohrungen vorgesehen, so daß die Ausnehmungen jeder Dichtungsfläche mit einer Bohrung versehen ist.

Auf diese Weise kann innerhalb des Schottes der notwendige Prüfraum geschaffen werden, indem ein kommunizierendes System von Rohrleitungen hergestellt wird, das sämtliche abdichtenden Flächen der Module erreicht und bei Beaufschlagung mit einem Prüfdruck etwaige Undichtigkeiten sofort und problemlos festgestellt und beseitigt werden können.

Weitere Einzelheiten der Erfindung ergeben sich der aus der nachfolgenden ausführlichen Beschreibung und den beigefügten Zeichnungen, in denen eine Ausführungsform der Erfindung beispielsweise veranschaulicht ist. In den Zeichnungen zeigen:

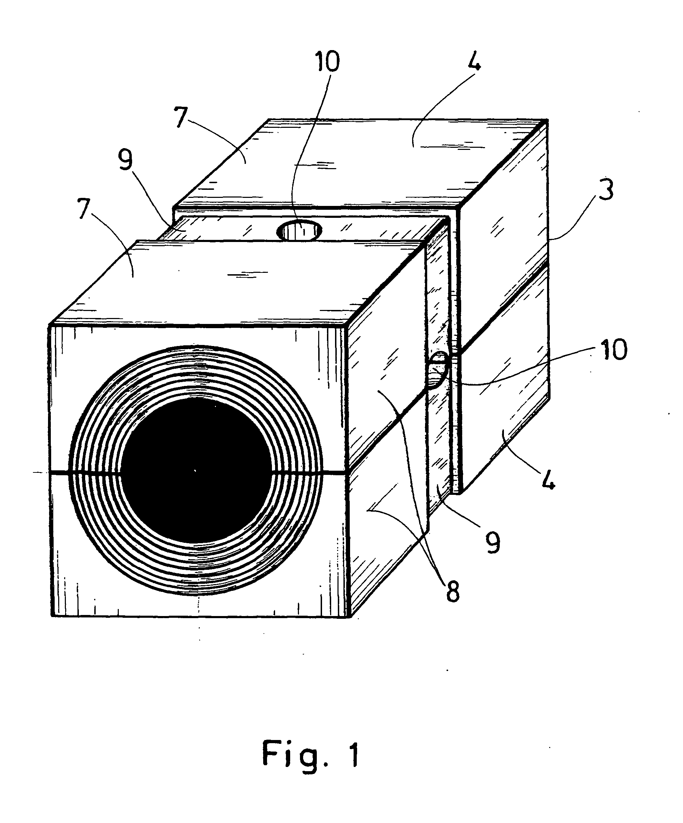

- Fig. 1:: Ein erfindungsgemäßes Modul in perspektivischer Darstellung;

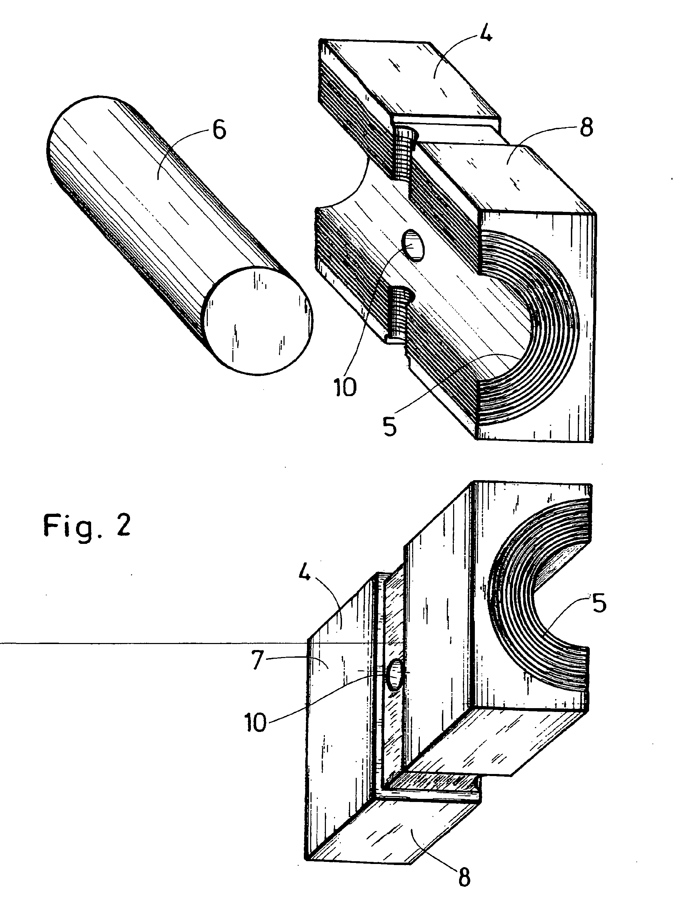

- Fig. 2:: zwei Teilstücke eines Moduls mit Füllstück in perspektivischer Darstellung;

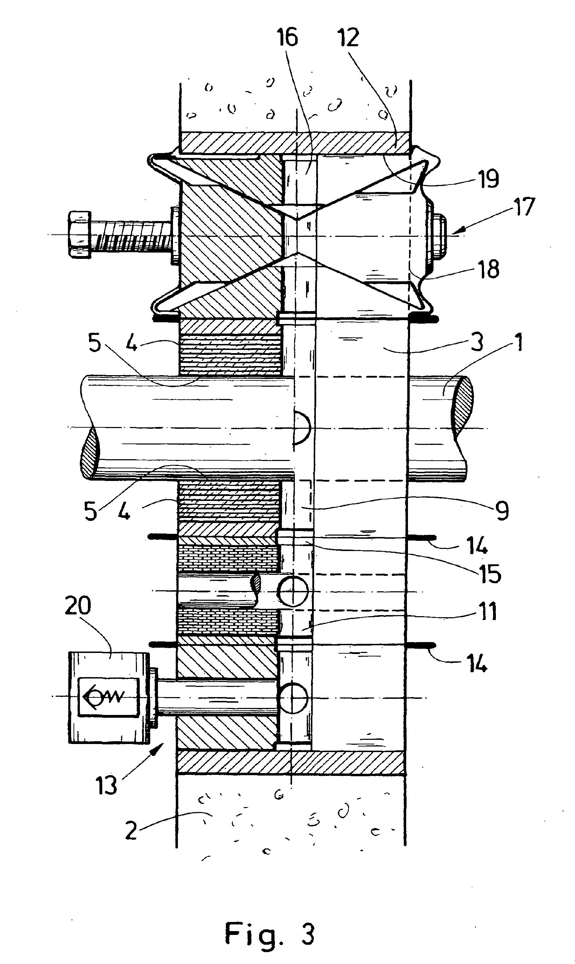

- Fig. 3:: ein senkrechter Schnitt durch eine modulare Schottung in Rahmenbauweise;

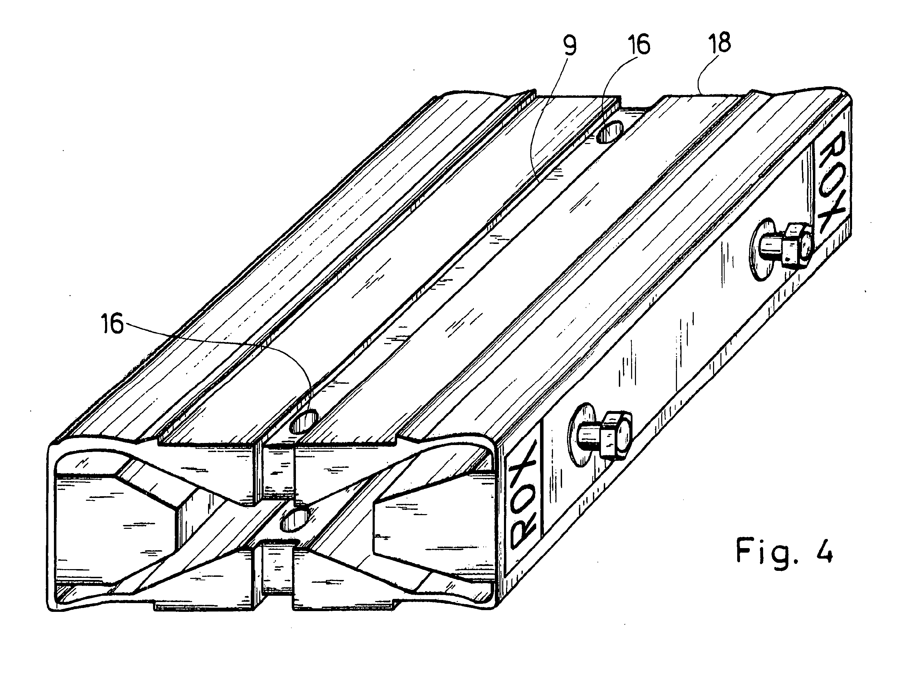

- Fig. 4:: eine perspektivische Darstellung einer Keildichtung und

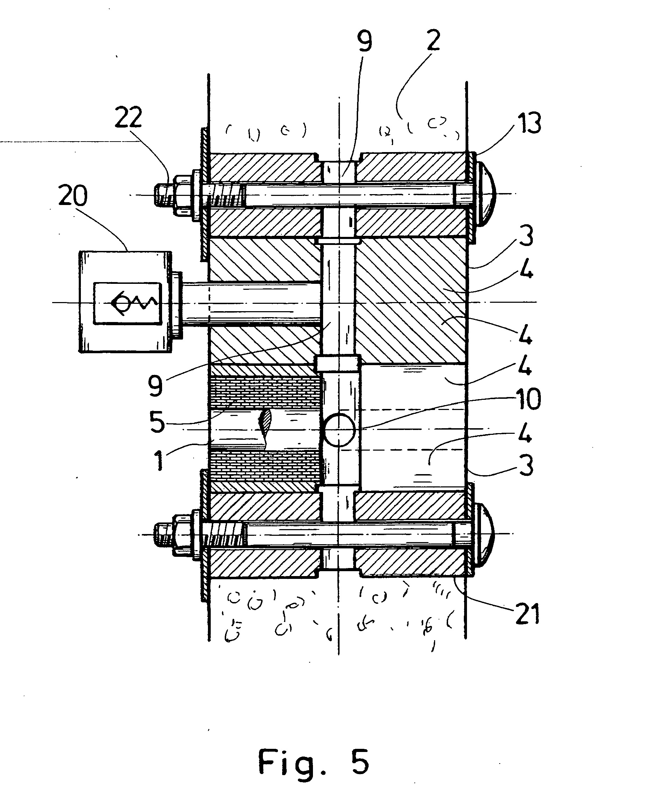

- Fig. 5: ein senkrechter Schitt durch ein modulare Schottung in Stopfrahmenbauweise.

Ein erfindungsgemäßes modulares Gasschott zur dichten Durchführung von Kabeln und Rohrleitungen 1 durch Wände 2 von Bauwerken und Schiffen besteht im wesentlichen aus Modulen 3, die ihrerseits aus zwei quaderförmigen Teilen 4 mit halbzylindrischen Ausnehmungen 5 bestehen, die entweder ein Kabel, eine Rohrleitung 1 oder ein Füllstück 6 abdichtend umschließen, wobei jedes Modul 3 in seinen äußeren Dichtungsflächen 7, 8 umlaufende, quer zur Durchführungsrichtung der Kabel oder Rohrleitungen 1 verlaufende Ausnehmungen 9 aufweist und in mindestens einer der Ausnehmungen 9 mindestens eine Bohrung 10 vorgesehen ist, die von der Ausnehmung 9 bis an eine äußere Mantelfläche 11 des Kabels oder der Rohrleitung 1 oder des Füllstückes 6 heranreicht. Die Ausnehmungen 9 bestehen vorzugsweise aus ca. 2 mm tiefen rechteckigen Rundumeinfräsungen, deren Breite variabel gestaltet werden kann. Die Bohrungen 10 weisen vorzugsweise einen Durchmesser von 8 mm auf Die Module 3 werden in einen Rahmen 12 eingelegt, der in eine Öffnung 13 einer Wand 2 eingebaut ist. Jeweils zwischen zwei Lagen von Modulen 3 übereinander sind Ankerscheiben 14 eingelegt, die die Module 3 gegen Herausrutschen aus dem Rahmen 12 sichern. Die Ankerscheiben 14 weisen an ihren den Ausnehmungen 9 der Module benachbarten Bereichen Durchgangsbohrungen 15 auf, die vorzugsweise einen Durchmesser von 10 mm haben. Die Seiten der Ankerscheiben 14 sind zusätzlich jeweils dreieckig ausgestanzt. Dadurch bildet eine Mehrzahl von Modulen 3 miteinander und mit dem sie umgebenden Rahmen und den Bohrungen 10 ein kommunizierendes System. Das kommunizierende System besteht aus einem Netz von horizontalen und vertikalen Rohrleitungen, das abgeschlossen im Inneren des geschlossenen Schotts ein prüfbares Gasvolumen aufweist. An dieses Netz sind Durchgänge 16 angeschlossen, die eine das Schott 17 abschließende Keildichtung 18 in Richtung auf die ihr zugewandte obere Pressfläche 19 des Rahmens 12 durchdringen. Diese Keildichtung 18 ist ebenfalls mit umlaufenden Ausnehmungen 9 versehen.

Es ist auch möglich, eine modulare Schottung auch in Form eines runden Stopfrahmens 21 auszubilden, der in eine die Wand 2 durchdringende Kernbohrung eingesetzt ist. In den Stpofrahmen werden die Module3 in gleicher Weise wie zuvor beschrieben eingelegt und durch Festziehen der Spannbolzen abdichten verpreßt. Eines der Module 3 ist mit einer verschließbaren Druckluftkupplung 20 versehen, die abdichtend in den halbzylindrischen Ausnehmungen 5 der quaderförmigen Teile 4 der Module eingesetzt ist und die über ein einen Druckverlust anzeigenden Manometer mit einer Druckluftquelle verbunden ist.

Unmittelbar nach Einbau des modularen Gasschotts kann mit Hilfe eines handelsüblichen Baukompressors und dem Manometer festgestellt werden, ob das System dicht oder undicht ist. Hierfür wird vorzugsweise ein Prüfdruck von ca. 4 bar in das Netz gepresst und mit Hilfe des Manometers der im Fall der Undichtigkeit sofort ablesbare Druckabfall gemessen. Wird zwischen dem Netz und der "Außenwelt" eine Undichtigkeit festgestellt, so kann mit Hilfe des handelsüblichen blasenbildenden Lecksuchsprays ermittelt werden, ob beide Seiten oder nur eine Seite des Moduls 3 undicht ist.

Wenn eine Undichtigkeit festgestellt wird, kann entweder durch Wiederholung der Montage des betreffenden Moduls 3 die Undichtigkeit beseitigt werden oder aber, wenn dies nicht gelingt, ein anderes Modul 3 eingesetzt werden. Auf diese Weise können die Module 3 auch auf Fabrikationsfehler untersucht werden.

## Patentansprüche

1. Modulare Schottung zur dichten Durchführung von Kabeln und Rohrleitungen durch Bauteile aller Art mit aus zwei quaderförmigen Teilen mit jeweils einer halbzylindrischen Ausnehmung bestehenden Modulen, die entweder ein Kabel, eine Rohrleitung oder ein Füllstück abdichtend umschließen, **dadurch gekennzeichnet, dass** jedes Modul (3) in seinen äußeren Dichtungsflächen (7, 8) umlaufende, quer zur Durchführungsrichtung der Kabel oder Rohrleitungen (1) verlaufende Ausnehmungen (9) aufweist und in mindestens einer der Ausnehmungen (9) mindestens eine Bohrung (10) vorgesehen ist, die bis an eine äußere Mantelfläche (11) des Kabels, der Rohrleitung (1) oder des Füllstückes (6) heranreicht.

2. Modulare Schottung nach Anspruch 1, **dadurch gekennzeichnet, dass** jedes Teil (4) eines Modules (3) mindestens eine Bohrung (10) aufweist.

3. Modulare Schottung nach Anspruch 1 und 2, **dadurch gekennzeichnet, dass** jedes Modul (3) zwei Bohrungen (10) aufweist

4. Modulare Schottung nach Anspruch 1 bis 3, **dadurch gekennzeichnet, dass** eine Mehrzahl von Modulen (3) miteinander und mit dem sie umgebenden Rahmen (12) und den Bohrungen (10) ein kommunizierendes System ausbilden.

5. Modulare Schottung nach Anspruch 1 bis 3, **dadurch gekennzeichnet, dass** eine Mehrzahl von Modulen (3) miteinander und mit einem sie umgebenden Stopfrahmen (21) und den Bohrungen (10) ein kommunizierendes System ausbilden.

6. Modulare Schottung nach Anspruch 1 bis 5, **dadurch gekennzeichnet, dass** das kommunizierende System aus einem Netz von horizontalen und vertikalen Rohrleitungen besteht, das abgeschlossen im Inneren des geschlossenen Schotts (17) ein prüfbares Gasvolumen aufweist.

7. Modulare Schottung nach Anspruch 1 bis 4 und 6, **dadurch gekennzeichnet, dass** das Netz mit Durchgängen (16)verbunden ist, die die das Schott abdichtende Keildichtung (18) in Richtung auf eine obere Pressfläche (19) des Rahmens (12) durchdringen und ihrerseits mit umlaufenden Ausnehmungen (9) der Keildichtung verbunden sind.

8. Modulare Schottung nach Anspruch 1 bis 4, 6 und 7, **dadurch gekennzeichnet, dass** jeweils zwischen zwei übereinander angeordneten Lagen von Modulen (3) Ankerscheiben (14) vorgesehen sind, die benachbart zu den Ausnehmungen (9) in den äußeren Dichtungsflächen (7, 8) der Module (3) Durchgangsbohrungen (15) aufweisen.

9. Modulare Schottung nach Anspruch 1 bis 8, **dadurch gekennzeichnet, dass** das Netz über eine Druckluftkupplung (20) mit einer Druckluftquelle und einem einen Druckverlust anzeigenden Manometer verbunden ist.

## Claims

1. Modular partition for sealed feed-through of cables and piping through all sorts of components, having modules formed of two rectangular parts, each having a semicylindrical notch, which modules sealingly surround either a cable, a piping or a blind, **characterized in that** each module (3) have encircling notches (9) on their outer sealing faces (7, 8) extended transverse to the cable or piping (1) and provided with at least one bore (10) in at least one of the notches (9), which reaches an outer jacket surface (11) of the cables, the piping (1) or the blinds (6).

2. Modular partition of claim 1, **characterized in that** each part (4) of one module (3) has at least one bore (10).

3. Modular partition of claim 1 and 2, **characterized in that** each module (3) has two bores (10).

4. Modular partition of claims 1 to 3, **characterized in that** a number of modules (3) forms a communicating system with each other and with the frame (12) surrounding them and the bores (10).

5. Modular partition of claims 1 to 3, **characterized in that** a number of modules (3) forms a communicating system with each other and with a stuffing frame (21) surrounding them and the bores (10).

6. Modular partition of claims 1 to 5, **characterized in that** the communicating system comprises a net of horizontal and vertical piping, which shows a testable gas volume closed off in the inner of the closed bulkhead (17).

7. Modular partition of claims 1 to 4 and 6, **characterized in that** the net is connected with passages (16), which penetrate the wedge sealing (18) sealing the bulkhead in the direction of an upper pressure surface of the frame (12) and which in their turn are connected with encircling notches (9) of the wedge sealing.

8. Modular partition of claims 1 to 4, 6 and 7, **characterized in that** anchor plates (14) are arranged between each of two layers of modules (3) arranged one above the other, and which show through bores (15) adjacent to the notches (9) in the outer sealing faces (7, 8) of the modules (3).

9. Modular partition of claims 1 to 8, **characterized in that** the net is connected to a source of compressed air and a gauge showing pressure loss via an air coupling (20).

## Revendications

1. Élément de cloison modulaire destinée à faire passer de manière étanche des câbles et des conduites à travers des éléments de construction de tous types comprenant des modules constitués de deux parties parallélépipédiques dotées respectivement d'un évidement semi-cylindrique, lesquels modules enferment de manière étanche soit un câble, soit une conduite soit une pièce d'obturation, **caractérisée en ce que** chaque module (3) comprend dans ses surfaces d'étanchéité extérieures (7, 8) des évidements périphériques(9), s'étendant transversalement à la direction de passage des câbles ou conduites (1) et au moins un perçage (10) est prévu dans au moins un des évidements (9), lequel perçage parvient jusqu'à une surface d'enveloppe extérieure (11) du câble, de la conduite (1) ou de la pièce d'obturation (6).

2. Élément de cloison modulaire selon la revendication 1, **caractérisée en ce que** chaque partie (4) d'un module (3) comprend au moins un perçage (10).

3. Élément de cloison modulaire selon les revendications 1 et 2, **caractérisée en ce que** chaque module (3) comprend deux perçages (10).

4. Élément de cloison modulaire selon l'une quelconque des revendications 1 à 3, **caractérisée en ce qu'**une pluralité de modules (3) forment les unes avec les autres et avec le cadre (12) les entourant et les perçages (10) un système communicant.

5. Élément de cloison modulaire selon l'une quelconque des revendications 1 à 3, **caractérisée en ce qu'**une pluralité de modules (3) forment les unes avec les autres et avec un cadre à garniture (21) les entourant et les perçages (10) un système communicant.

6. Élément de cloison modulaire selon l'une quelconque des revendications 1 à 5, **caractérisée en ce que** le système communicant est constitué d'un réseau de conduites horizontales et verticales, qui comprend un volume de gaz contrôlable enfermé à l'intérieur de la cloison (17) fermée.

7. Élément de cloison modulaire selon l'une quelconque des revendications 1 à 4 et 6, **caractérisée en ce que** le réseau est relié à des passages (16) qui traversent le joint à coin (18) étanchéifiant la cloison en direction d'une surface de compression supérieure (19) du cadre (12) et sont reliés pour leur part aux évidements (9) périphériques du joint à coin.

8. Élément de cloison modulaire selon l'une quelconque des revendications 1 à 4, 6 et 7, **caractérisée en ce que** des joints d'ancrage (14), qui comprennent des modules (3) de perçage traversant (15) au voisinage des évidements (9) dans les surfaces d'étanchéité extérieures (7, 8), sont prévus respectivement entre deux couches superposées de modules (3) .

9. Élément de cloison modulaire selon l'une quelconque des revendications 1 à 8, **caractérisée en ce que** le réseau est relié par un raccord à air comprimé (20) à une source d'air comprimé et à un manomètre indiquant une perte de pression.
